# FASCICULE DE BREVET EUROPEEN

(11) **EP 1 102 772 B1**
(45) Date de publication et mention de la délivrance du brevet: **23.10.2002**
(21) Numéro de dépôt: 99936668.5
(22) Date de dépôt: 02.08.1999
(51) Int. Cl.: C07F 5/02

(54) **PROCEDE DE PREPARATION DE DERIVES DE TETRAKIS (PENTAFLUOROPHENYL) BORATE**
VERFAHREN ZUR HERSTELLUNG VON DERIVATEN DES TETRAKIS(PENTAFLUOROPHENYL)BORATES
METHOD FOR PREPARING TETRAKIS (PENTAFLUOROPHENYL) BORATE DERIVATIVES

(30) Priorité: 07.08.1998 FR 9810212
(43) Date de publication de la demande: 30.05.2001
(73) Titulaire: RHODIA CHIMIE, 92408 Courbevoie Cédex (FR)
(72) Inventeur: DURY, Michel, F-69006 Lyon (FR); PRIOU, Christian, West Windsor, NJ 08550 (US); RICHARD, Jacques, F-38200 Luzinay (FR)
(86) Numéro de dépôt international: FR9901910
(87) Numéro de publication internationale: WO00008028

(56) Documents cités:
- EP-A- 0 608 563
- EP-A- 0 609 452
- FR-A- 2 727 416
- MASSEY A G ET AL: "PERFLUOROPHENYL DERIVATIVES OF THE ELEMENTS I TRI(PENTAFLUOROPHENYL)BORON" JOURNAL OF ORGANOMETALLIC CHEMISTRY, vol. 2, 1 janvier 1964 (1964-01-01), pages 245-250, XP002035194

## Description

La présente invention a pour objet un nouveau procédé de préparation de dérivés de tétrakis(pentafluorophényl)borate.

Les dérivés de borates obtenus selon l'invention sont des produits utiles comme intermédiaires pour la préparation de catalyseurs de réticulation et/ou de polymérisation par voie thermique, par voie photochimique et/ou sous faisceau d'électrons.

Ces intermédiaires peuvent également être utilisés pour préparer des catalyseurs de type Ziegler-Natta pour la polymérisation d'oléfines, tels que ceux décrits par exemple dans les documents WO 9412547 et EP-A-277004.

Ces dernières années, de nombreux documents ont été publiés relatifs à l'utilisation des catalyseurs de polymérisation obtenus à partir des dérivés de tétrakis(pentafluorophényl)borate. A titre d'exemples, on citera notamment les brevets EP 562 897 et EP 56922 de Rhodia Chimie.

D'autres documents concernent la préparation de dérivés de tétrakis(pentafluorophényl)borate. Par exemple:
- le document EP 604 961 décrit l'accès aux borates MB(C₆F₅)₄ par voie magnésienne,
- le document EP 608 563 décrit l'accès au produit LiB(C₆F₅)₄ à partir de pentafluorobenzène en solution dans de l'éther éthylique.
- le document EP 609 452 concerne un procédé de préparation de dérivés tétrakisfluorophénylborate comportant 2 étapes séquencées passant notamment par la formation d'un adduit tel que LiB(C₆F₅)₄.OEt₂.
- le document FR-A-2 727 416 indique un procédé de préparation de KB(C6F5)4 conduit en présence d'ether isopropylique.
- et le document Journal of Organomettallic Chemistry, vol 2, 1 janvier 1964, pages 245 à 250," divulgue un procédé de synthèse de LiB(C6F5)4 en présence d'ether éthylique et passant par l'isolation de B(C6F5)3.

Toutefois, les procédés, notamment industriels, décrits dans la littérature ne sont pas satisfaisants. En particulier, l'utilisation d'organomagnésien ne permet pas d'atteindre un rendement élevé de la réaction de transformation de BR3, plus précisément BCI3, en B(C₆F₅)₄⁻. De même, l'utilisation de solvants tels que l'éther éthylique ou l'éther isopropylique ne permet pas d'optimiser les procédés industriels en termes de temps de réaction et de rendement en produit final. A titre d'exemple, l'utilisation du trichlorure de bore sous forme gazeuse n'est pas envisageable avec de l'éther éthylique ou l'éther isopropylique. En effet, le BCI3 forme avec ces éthers des complexes relativement stables, peu réactifs avec l'espèce LiC₆F₅.

La présente invention a pour objet un nouveau procédé optimisé de préparation de dérivés de tétrakis(pentafluorophényl)borate permettant de pallier les inconvénients cités précédemment.

Parmi les nombreux avantages de ce nouveau procédé, la pureté des dérivés du tétrakis(pentafluorobenzène)borate, et notamment du tétrakis(pentafluorobenzène)-borate de potassium, est améliorée. En outre, le nouveau procédé ne génère que très peu de sous produit B(C₆F₅)₃.

Ainsi, il a donc maintenant été mis au point un nouveau procédé de préparation de tétrakis(pentafluorophényl)borate de formule générale MB(C₆F₅)₄ (I), M étant choisi parmi Na⁺, Li⁺ ou K⁺ dans lequel:
(a) une solution de C6F5X, X étant choisi parmi H, Cl, Br et 1, dans de l'éther butylique anhydre est mise en contact avec un alkyllithium, le rapport molaire de C₆F₅X/alkyllithium étant compris entre 1 et 1.1, et le radical alkyl étant choisi parmi les radicaux, linéaires ou ramifiés comprenant de 1 à 10 atomes de carbone, et de préférence un radical hexyl.;
(b) le produit résultant est mis en contact avec BR3 (II) non mis en solution préalablement avant son utilisation, R, identique ou différent étant choisi parmi, un atome de chlore, un atome de fluor, un atome de brome, et un radical alcoxy comprenant de 1 à 4 atomes de carbone.

BR3 utilisé ainsi permet de supprimer une étape de conditionnement avant son introduction. Cette utilisation directe de BR3 améliore considérablement la vitesse de réaction au sein du milieu (mise en contact direct).

De plus, le choix de l'éther butylique anhydre comme solvant et de BR3 permet d'éviter la formation de complexes pouvant être stables et nuisibles à la réactivité des produits mis en oeuvre au sein du procédé de préparation.

Selon un premier mode particulier de l'invention. BR3 est avantageusement introduit sous forme gazeuse dans le milieu réactionnel.

Selon un deuxième mode particulier de l'invention. BR3 est du trichlorure de bore.

Comme exemples d'autres produits BR3 (II). on citera BF₃.OEt₂,B(OMe)₃.,

BBr₃.,etc.,

A titre d'exemple de procédé industriel de préparation selon l'invention, les étapes ci-dessous sont suivies pour la préparation de tétrakis(pentafluorophényl)borate de potassium :
**(a)** on introduit l'éther butylique anhydre et le pentafluorobenzène dans le réacteur, puis on mélange sous agitation en refroidissant à une température d'environ -70°C,
**(b)** on coule à vitesse contrôlée dans le milieu réactionnel une solution d'alkyllithium, et de préférence de l'hexyllithium,
**(c)** puis on ajoute dans le milieu réactionnel du BR3 non mis en solution, de préférence du trichlorure de bore, et on laisse le milieu remonter à une température proche de 0°C,
**(d)** on introduit ensuite une solution aqueuse de chlorure de potassium, le mélange étant agité subséquemment à température ambiante,
**(e)** après décantation, on soutire la phase aqueuse et on ajoute une solution de chlorure de potassium avant distillation sous une pression réduite, de préférence inférieure à 500 mbar (50 kPa),
**(f)** après filtration et éventuellement lavage, on récupère le dérivé de tétrakis(pentafluorophényl)borate de formule générale KB(C₆F₅)₄.

### EXEMPLES

Les exemples suivants sont donnés à titre illustratif. Ils permettent notamment de mieux comprendre l'invention et de faire ressortir certains des avantages et entrevoir quelques-unes des variantes de réalisation.

Les exemples de préparations 1 et 2 sont des procédés de préparation selon l'invention et l'exemple 3 est un procédé de préparation donné à titre comparatif.

### Exemple 1

Dans un réacteur homothétique à double enveloppe, de 0,71, équipé d'une turbine de Rushes et soigneusement inerte à l'argon, on charge
- 200 ml d'éther butylique anhydre (ALDRICH),
- 36 g de pentafluorobenzène (FLUOROSE).

Le mélange est agité et refroidi à la température de -70°C par une circulation d'acétone refroidi à la glace carbonique.

On coule alors par l'intermédiaire d'une ampoule de coulée 56,8 9 d'une solution à 33% d'hexyllithium dans l'hexane (CHEMETALL). La durée d'introduction est de 20 min, et la température de la masse réactionnelle évolue entre -70°C et -63°C.

Ce mélange est agité pendant 20 min. La température redescend à -70°C. On ajoute sur la masse réactionnelle goutte à goutte 49,5 ml d'une solution 1 M de trichlorure de bore dans l'heptane (ALDRICH). On laisse ensuite le mélange sous agitation pendant 10 min, puis on coupe la circulation du fluide réfrigérant.

La température du mélange remonte à environ 0,5°C, température à laquelle on ajoute 250 ml d'une solution de KCI à 25% dans l'eau. La température passe de 0,5°C à 17°C pendant l'addition. La vitesse d'agitation est augmentée. Le mélange est agité pendant 2 h à température ambiante, puis l'agitation est arrêtée. La masse réactionnelle est décantée. On soutire la phase aqueuse (246 ml).

La phase organique restée dans le réacteur est agitée, et on remplace l'ampoule de coulée par une colonne vigreux en rétrogradation, un séparateur et un ballon récepteur de 500 ml.

On charge 250 ml de la solution aqueuse de KCI à 25%.

La double enveloppe du réacteur est chauffée à la température de 85°C, et la pression à l'intérieur de l'appareillage est abaissée à environ 200 mbar (20 kPa). Les solvants organiques sont distillés sans dépasser la température de 76°C dans la masse réactionnelle. Après avoir distillé 275 ml de mélange réactionnel (dont 60 ml d'eau), on observe l'apparition d'un précipité blanc de KB(C₆F₅)₄.

L'ensemble du montage est ramené à pression atmosphérique. On ajoute à la masse réactionnelle 60 ml d'eau et 50 ml de toluène.

Après avoir fixé la pression dans l'appareillage à environ 200 mbar (20 kPa), on poursuit la distillation.

On récupère 45 ml de distillat. La pression dans l'appareillage est ramenée à la pression atmosphérique, puis la masse réactionnelle est refroidie à la température de 35°C.

Le tétrakis(pentafluorophényl)borate de potassium précipite. Il est récupéré par filtration sur un fritté n°3. Un lavage avec 100 ml d'eau de rinçage du réacteur est effectué. Le solide blanc obtenu est séché pendant 16 h, à la température de 50°C, sous un vide de 20 mbar (2 kPa).

On récupère 34,4 g de tétrakis(pentafluorophényl)borate de potassium soit :
- un rendement de 96,8% par rapport au BCl₃ engagé,
- un rendement de 89,4% par rapport au pentafluorobenzène engagé.

Les caractéristiques analytiques du produit obtenu se trouvent dans le tableau 1.

### Exemple 2

Dans un réacteur homothétique à double enveloppe, de 0,7 I, équipé d'une turbine de Rushton et soigneusement inerté à l'argon, on charge
- 200 ml d'éther butylique anhydre (ALDRICH)
- 36 g de pentafluorobenzène (FLUOROCHEM)

Le mélange est agité et refroidi à la température de -70°C par une circulation d'acétone refroidi à la glace carbonique.

On coule alors par l'intermédiaire d'une ampoule de coulée 56,8 9 d'une solution à 33% d'hexyllithium dans l'hexane (CHEMETALL). La durée d'introduction est de 20 min, et la température de la masse réactionnelle évolue entre -70°C et -63°C.

Ce mélange est agité pendant 20 min. La température redescend à -70°C. Par l'intermédiaire d'un tube plongeur, on introduit 5,8 g de trichlorure de bore gazeux en 5 mn. On laisse ensuite le mélange sous agitation pendant 10 min, puis on coupe la circulation du fluide réfrigérant.

La température du mélange réactionnel remonte jusqu'à une température d'environ 0,5°C, température à laquelle on ajoute 250 ml d'une solution de KCI à 25% dans l'eau.

La température passe de 0,5°C à 17°C pendant l'addition. La vitesse d'agitation est augmentée. Le mélange est agité pendant 2 h à température ambiante, puis l'agitation est arrêtée. La masse réactionnelle est décantée. On soutire la phase aqueuse (246 ml).

La phase organique restée dans le réacteur est agitée, et on remplace l'ampoule de coulée par une colonne vigreux en rétrogradation, un séparateur et un ballon récepteur de 500 ml.

On charge 250 ml de la solution aqueuse de KCI à 25%.

La double enveloppe du réacteur est chauffée à la température de 85°C, et la pression à l'intérieur de l'appareillage est abaissée à 200 mbar (20 kPa). Les solvants organiques sont distillés sans dépasser la température de 76°C dans la masse réactionnelle. Après avoir distillé 275 ml de mélange réactionnel (dont 60 ml d'eau), on observe l'apparition d'un précipité blanc de KB(C₆F₅)₄.

L'ensemble du montage est ramené à pression atmosphérique. On ajoute à la masse réactionnelle 60 ml d'eau et 50 ml de toluène.

Après avoir fixé la pression dans l'appareillage à 200 mbar (20 kPa), on poursuit la distillation.

On récupère 45 ml de distillat. La pression dans l'appareillage est ramenée à la pression atmosphérique, puis la masse réactionnelle est refroidie à la température de 35°C.

Le tétrakis(pentafluorophényl)borate de potassium précipite. Il est récupéré par filtration sur un fritté n°3. Un lavage avec 100 ml d'eau de rinçage du réacteur est effectué. Le solide blanc obtenu est séché pendant 16 h, à la température de 50°C, sous un vide de 20 mbar (2 kPa).

On récupère 33,22 g de tétrakis(pentafluorophényl)borate de potassium soit :
- un rendement de 93,5% par rapport au BCI3 engagé,
- un rendement de 86,4% par rapport au pentafluorobenzène engagé.

Les caractéristiques analytiques du produit obtenu se trouvent dans le tableau 1.

### Exemple 3

Dans un réacteur homothétique à double enveloppe, de 0,7 I, équipé d'une turbine de Rushton et soigneusement inerte à l'argon, on charge :
- 200 ml d'éther isopropylique anhydre (ALDRICH)
- 36 g de pentafluorobenzène (FLUOROCHEM)

Le mélange est agité et refroidi à la température de -70°C par une circulation d'acétone refroidi à la glace carbonique. On coule alors par l'intermédiaire d'une ampoule de coulée 56,8 g d'une solution à 33% d'hexyllithium dans l'hexane (CHEMETALL). La durée d'introduction est de 20 min et la température de la masse réactionnelle évolue entre -70°C et -63°C.

Ce mélange est agité pendant 20 min. La température redescend à -70°C. On ajoute sur la masse réactionnelle, goutte à goutte, 47,3 ml d'une solution 1 M de trichlorure de bore dans l'heptane (ALDRICH). On laisse ensuite le mélange sous agitation pendant 10 min, puis on coupe la circulation du fluide réfrigérant. La température du milieu remonte à environ 0,5°C, température à laquelle on ajoute 250 ml d'une solution de KCI à 25% dans l'eau. La température passe de 0,5°C à 17°C pendant l'addition. La vitesse d'agitation est augmentée. Le mélange est agité pendant 2 h à température ambiante, puis l'agitation est arrêtée.

La masse réactionnelle est décantée. On soutire la phase aqueuse (246 ml).

La phase organique restée dans le réacteur est agitée, et on remplace l'ampoule de coulée par une colonne vigreux en rétrogradation, un séparateur et un ballon récepteur de 500 ml.

On charge 250 ml de la solution aqueuse de KCI à 25%.

La double enveloppe du réacteur est chauffée à la température de 85°C, et la pression à l'intérieur de l'appareillage est abaissée à environ 200 mbar (20 kPa). Les solvants organiques sont distillés sans dépasser la température de 76°C dans la masse réactionnelle. Après avoir distillé 275 ml de mélange réactionnel (dont 60 ml d'eau), on observe l'apparition d'un précipité blanc de KB(C₆F₅)₄.

L'ensemble du montage est ramené à pression atmosphérique. On ajoute à la masse réactionnelle 60 ml d'eau et 50 ml de toluène.

Après avoir fixé la pression dans l'appareillage à 200 mbar (20 kPa) on poursuit la distillation.

On récupère 45 ml de distillat. La pression dans l'appareillage est ramenée à la pression atmosphérique, puis la masse réactionnelle est refroidie à la température de 35°C.

Le tétrakis(pentafluorophényl)borate de potassium précipite. Il est récupéré par filtration sur un fritté n°3. Un lavage avec 100 ml d'eau de rinçage du réacteur est effectué. Deux lavages par 30 ml de toluène sont ensuite effectués. Le solide blanc obtenu est séché pendant 16 h, à la température de 50°C, sous un vide de 20 mbar (2 kPa).

On récupère 30,1 g de tétrakis(pentafluorophényl)borate de potassium soit :
- un rendement de 88,6% par rapport au BCI3 engagé
- un rendement de 80,8% par rapport au pentafluorobenzène engagé.

Les caractéristiques analytiques du produit obtenu se trouvent dans le table 1.

### Exemple 4

On utilise un ballon tétracol de 4000 ml, équipé d'une agitation mécanique, d'un réfrigérant à eau, d'un thermomètre et d'une ampoule de coulée. Le montage est préalablement séché sous atmosphère d'argon, puis on charge l'heptane anhydre (1600 ml) et le bromopentafluorobenzène (151,7 g; 0,614 mole).

L'ensemble est agité et est refroidi à -75°C à l'aide d'un bain glace carbonique - acétone. Le butyllithium (solution 1,6 M dans l'hexane; 373 ml ) est chargé dans l'ampoule de coulée, et est ajouté goutte à goutte en 50 minutes.

Le mélange est ensuite laissé sous agitation pendant 5 heures à la température de -78°C. Le trichlorure de bore (solution 1M dans l'hexane; 149 ml ) est chargé dans l'ampoule de coulée non refroidie, et est additionné en trente minutes. On retire le bain réfrigérant, et on laisse revenir le mélange réactionnel à la température ambiante.

On laisse ensuite sous agitation pendant 12 heures. On ajoute goutte à goutte une solution aqueuse saturée en KCI (180 g dans 750 ml d'eau ), puis on laisse sous agitation pendant deux heures.

Le mélange réactionnel est filtré, le filtrat est lavé par une solution saturée en KCl, puis est séché à la température de 40°C sous un vide de 1 mm Hg (133,32 kPa).

On récupère le tétrakis(pentafluorophényl)borate de potassium sous la forme d'une poudre blanche.

Les caractéristiques analytiques du produit obtenu se trouvent dans le tableau 1

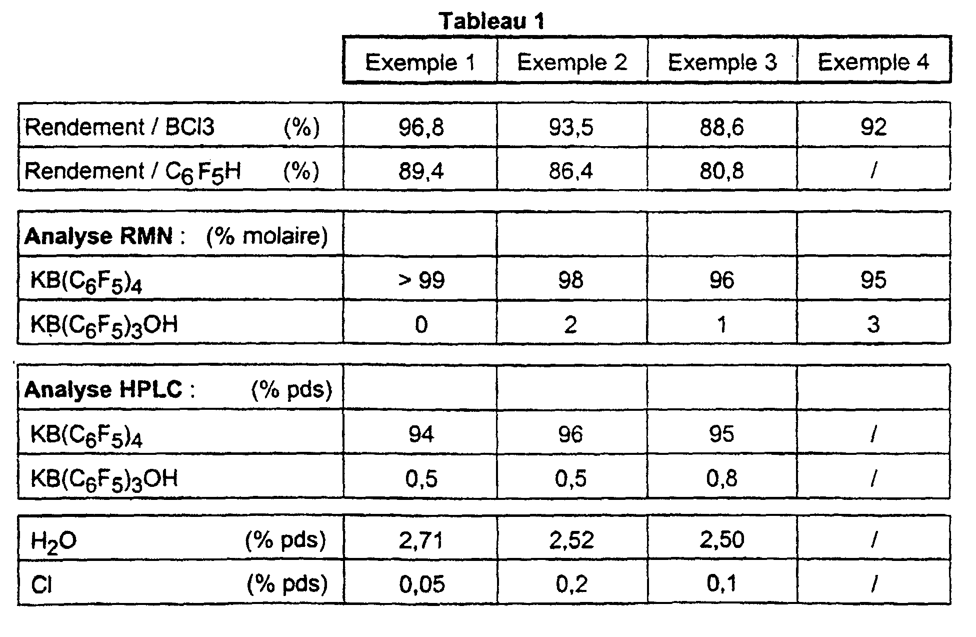

## Revendications

1. Procédé de préparation de tétrakis(pentafluorophényl)borate de formule générale MB(C₆F₅)₄, M étant choisi parmi Na⁺, Li⁺ ou K⁺, **caractérisé en ce que** :
(a) une solution de C₆F₅X, X étant choisi parmi H, Cl, Br ou I, dans de l'éther butylique anhydre est mise en contact avec un alkyllithium, le rapport molaire du C₆F₅X / alkyllithium étant compris entre 1 et 1.1, et le radical alkyl, linéaire ou ramifié, comprenant de 1 à 10 atomes de carbone;
(b) le produit résultant est mis en contact avec BR₃ non mis en solution préalablement avant son introduction dans le milieu réactionnel ; R, identique ou différent étant choisi parmi un atome de chlore, un atome de fluor, un atome de brome, un radical alcoxy comprenant entre 1 et 4 atomes de carbone.

2. Procédé de préparation selon la revendication 1 **caractérisé en ce que** le radical alkyl est le radical hexyl.

3. Procédé de préparation selon l'une quelconque des revendications 1 à 2 **caractérisé en ce que** BR₃ est introduit sous forme gazeuse dans le milieu réactionnel.

4. Procédé de préparation selon l'une quelconque des revendications 1 à 3 **caractérisé en ce que** BR₃ est du trichlorure de bore.

5. Procédé de préparation selon l'une quelconque des revendications précédentes de tétrakis(pentafluorobenzène)borate de potassium dans un réacteur comprenant les étapes suivantes :
**(a)** on introduit l'éther butylique anhydre et le pentafluorobenzène dans le réacteur, puis on mélange sous agitation en refroidissant à une température d'environ -70°C,
**(b)** on coule à vitesse contrôlée dans le milieu réactionnel une solution d'alkyllithium,
**(c)** puis on ajoute dans le milieu réactionnel du BR₃ non mis en solution préalablement, de préférence du trichlorure de bore, et on laisse le milieu remonter à une température proche de 0°C,
**(d)** on introduit ensuite une solution aqueuse de chlorure de potassium, le mélange étant agité subséquemment à température ambiante,
**(e)** après décantation, on soutire la phase aqueuse et on ajoute une solution de chlorure de potassium avant distillation sous une pression réduite,
**(f)** après filtration, on récupère le dérivé de tétrakis(pentafluorophényl)borate de formule générale KB(C₆F₅)₄.

6. Procédé de préparation selon la revendication 5 **caractérisée en ce que** I'alkyllithium est l'hexyllithium.

## Patentansprüche

1. Verfahren zur Herstellung von Tetrakis(pentafluorphenyl)borat der allgemeinen Formel MB(C₆F₅)₄, wobei M unter Na⁺, Li⁺ oder K⁺ ausgewählt ist, **dadurch gekennzeichnet, dass**:
a) eine Lösung von C₆F₅X, wobei X unter H, Cl, Br oder I ausgewählt ist, in wasserfreiem Butylether mit einem Alkyllithium in Kontakt gebracht wird, wobei das Molverhältnis C₆F₅X/Alkyllithium zwischen 1 und 1,1 liegt und der lineare oder verzweigte Alkylrest 1 bis 10 Kohlenstoffatome umfasst;
b) das resultierende Produkt mit BR₃, das vor seiner Einführung in das Reaktionsmedium nicht zuvor gelöst wurde, in Kontakt gebracht wird; wobei R, gleich oder verschieden, ausgewählt ist unter einem Chloratom, einem Fluoratom, einem Bromatom, einem Alkoxyrest mit 1 bis 4 Kohlenstoffatomen.

2. Verfahren zur Herstellung gemäß Anspruch 1, **dadurch gekennzeichnet, dass** der Alkylrest der Hexylrest ist.

3. Verfahren zur Herstellung gemäß einem der Ansprüche 1 bis 2, **dadurch gekennzeichnet, dass** BR₃ gasförmig in das Reaktionsmedium eingeführt wird.

4. Verfahren zur Herstellung gemäß einem der Ansprüche 1 bis 3, **dadurch gekennzeichnet, dass** BR₃ Bortrichlorid ist.

5. Verfahren zur Herstellung gemäß einem der vorhergehenden Ansprüche von Kalium-tetrakis(pentafluorbenzen)borat in einem Reaktor, umfassend die folgenden Schritte:
(a) man führt wasserfreien Butylether und Pentafluorbenzen in den Reaktor ein, dann mischt man unter Rühren, wobei man auf eine Temperatur von etwa -70°C abkühlt,
(b) man gießt mit kontrollierter Geschwindigkeit eine Alkyllithiumlösung in das Reaktionsmedium,
(c) dann fügt man dem Reaktionsmedium BR₃, das nicht zuvor gelöst wurde, vorzugsweise Bortrichlorid, zu und man lässt das Medium auf eine Temperatur nahe 0°C zurückkommen,
(d) man setzt dann eine wässrige Kaliumchloridlösung zu, wobei das Gemisch daraufhin bei Raumtemperatur gerührt wird,
(e) nach Dekantieren lässt man die wässrige Phase ab und man fügt eine Kaliumchloridlösung zu, bevor man unter vermindertem Druck destilliert,
(f) nach Filtrieren gewinnt man das Tetrakis(pentafluorphenyl)boratderivat der allgemeinen Formel KB(C₆F₅)₄.

6. Verfahren zur Herstellung gemäß Anspruch 5, **dadurch gekennzeichnet, dass** das Alkyllithium Hexyllithium ist.

## Claims

1. Process for the preparation of tetrakis(pentafluorophenyl)borate of general formula MB(C₆F₅)₄, M being chosen from Na⁺, Li⁺ or K⁺, **characterized in that**:
(a) a solution of C₆F₅X, X being chosen from H, Cl, Br and I, in anhydrous butyl ether is brought into contact with an alkyllithium, the C₆F₅X/alkyllithium molar ratio being between 1 and 1.1 and the linear or branched alkyl radical comprising from 1 to 10 carbon atoms;
(b) the resulting product is brought into contact with BR₃, undissolved beforehand before its introduction into the reaction mixture, R, which is identical or different, being chosen from a chlorine atom, a fluorine atom, a bromine atom and an alkoxy radical comprising between 1 and 4 carbon atoms.

2. Preparation process according to claim 1, **characterized in that** the alkyl radical is the hexyl radical.

3. Preparation process according to either one of claims 1 and 2, **characterized in that** BR₃ is introduced into the reaction mixture in the gaseous form.

4. Preparation process according to any one of claims 1 to 3, **characterized in that** BR₃ is boron trichloride.

5. Preparation process according to any one of the preceding claims for potassium tetrakis(pentafluorobenzene)borate in a reactor, comprising the following stages:
(a) the anhydrous butyl ether and the pentafluorobenzene are introduced into the reactor and are then mixed with stirring while cooling to a temperature of approximately -70°C,
(b) a solution of alkyllithium is run into the reaction mixture at a controlled rate,
(c) BR₃, undissolved beforehand, preferably boron trichloride, is then added to the reaction mixture and the mixture is allowed to rise to a temperature in the region of 0°C,
(d) an aqueous potassium chloride solution is then introduced, the mixture subsequently being stirred at ambient temperature,
(e) after separating by settling, the aqueous phase is withdrawn and a potassium chloride solution is added before distilling under a reduced pressure,
(f) after filtering, the tetrakis(pentafluorophenyl)borate derivative of general formula KB(C₆F₅)₄ is recovered.

6. Preparation process according to claim 5, **characterized in that** the alkyllithium is hexyllithium.
